(19) Europäisches Patentamt
European Patent Office
Office européen des brevets

(11) EP 2 775 318 B1

(12) FASCICULE DE BREVET EUROPEEN

(45) Date de publication et mention
de la délivrance du brevet:
**19.08.2015 Bulletin 2015/34**

(51) Int Cl.:
***G01S 17/89*** *(2006.01)*     ***H04N 5/30*** *(2006.01)*

(21) Numéro de dépôt: **14157705.6**

(22) Date de dépôt: **04.03.2014**

(54) **Procédé et système d'acquisition d'image**

Verfahren und System zur Bilderfassung

Method and system for image acquisition

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.03.2013 FR 1351922**

(43) Date de publication de la demande:
**10.09.2014 Bulletin 2014/37**

(73) Titulaire: **COMMISSARIAT A L'ENERGIE
ATOMIQUE ET AUX
ENERGIES ALTERNATIVES
75015 Paris (FR)**

(72) Inventeurs:
• **Boukhayma, Assim
38100 GRENOBLE (FR)**
• **Dupret, Antoine
91400 ORSAY (FR)**

(74) Mandataire: **Thibon, Laurent
Cabinet Beaumont
1, rue Champollion
38000 Grenoble (FR)**

(56) Documents cités:
**WO-A2-2005/112130     GB-A- 2 458 802**

**EP 2 775 318 B1**

**Description**

<u>Domaine</u>

La présente demande concerne des procédés et systèmes d'acquisition d'image.

<u>Exposé de l'art antérieur</u>

On connaît des systèmes d'acquisition d'image dits actifs, comportant :

une source d'émission d'ondes électromagnétiques disposée de façon à illuminer ou irradier une scène à observer ; et
un capteur d'image comportant une matrice de détecteurs ou pixels sensibles aux ondes émises par la source, disposé de façon à recevoir les ondes émises par la source après réflexion ou transmission par transparence par la scène.

Lors d'une phase d'acquisition d'image, la scène est illuminée par la source, et l'intensité du rayonnement reçu par chaque pixel du capteur est mesurée.
On s'intéresse ici plus particulièrement à des procédés et systèmes d'acquisition d'image actifs utilisant des sources émettant dans les gammes de fréquence térahertz ou infrarouge lointain, par exemple dans la plage de fréquence allant de 100 gigahertz (GHz) à 100 térahertz (THz).
Un exemple d'un spectromètre à laser fonctionnant dans le domaine des térahertz est décrit dans la demande de brevet GB2458802.
Un problème qui se pose est lié au fait que les détecteurs ou pixels sensibles aux ondes térahertz ou infrarouges ont des dimensions relativement importantes. En effet, les ondes térahertz et infrarouges sont caractérisées par des longueurs d'ondes allant de quelques micromètres à quelques millimètres, et les pixels doivent en conséquence avoir des dimensions du même ordre. Pour limiter leur coût et/ou respecter des contraintes d'encombrement, les capteurs d'image térahertz ou infrarouges ont donc généralement des résolutions relativement faibles, ce qui pose problème lorsqu'on souhaite acquérir des images en haute définition.

<u>Résumé</u>

Ainsi, un mode de réalisation prévoit un procédé d'acquisition d'une image d'une scène illuminée par un premier faisceau d'ondes électromagnétiques, à l'aide d'un capteur comportant au moins deux pixels sensibles auxdites ondes, comportant les étapes suivantes : a) pour chaque pixel, lire une première valeur de sortie du pixel représentative de l'intensité du rayonnement reçu par le pixel pendant une première période d'intégration au cours de laquelle le capteur est illuminé par un deuxième faisceau d'ondes électromagnétiques cohérent avec le premier faisceau ; et b) pour chaque pixel, lire une deuxième valeur de sortie du pixel représentative de l'intensité du rayonnement reçu par le pixel pendant une deuxième période d'intégration au cours de laquelle le capteur n'est pas illuminé par le deuxième faisceau, dans lequel les étapes a) et b) sont réitérées plusieurs fois en changeant, entre deux itérations successives, l'angle d'incidence ou un paramètre de phase du deuxième faisceau.
Selon un mode de réalisation, à chaque itération, pour chaque pixel du capteur, une troisième valeur représentative de la différence entre les première et deuxième valeurs de sortie du pixel est calculée.
Selon un mode de réalisation, le capteur comprend un nombre pair de pixels disposés en cercle, les pixels du cercle étant répartis par paires en des points diamétralement opposés du cercle.
Selon un mode de réalisation, à chaque itération, pour chaque paire de pixels diamétralement opposés du cercle, une quatrième valeur représentative de la somme des troisièmes valeurs calculées pour chacun des pixels de la paire est calculée.
Selon un mode de réalisation, le deuxième faisceau comprend des premières ondes polarisées selon une première direction, et des deuxièmes ondes polarisées selon une deuxième direction différente de la première direction.
Selon un mode de réalisation, les première et deuxième directions sont orthogonales.
Selon un mode de réalisation, à chaque itération, une valeur de déphasage entre les premières ondes et les deuxièmes ondes est modifiée.
Selon un mode de réalisation, les ondes électromagnétiques sont à une fréquence comprise entre 100 GHz et 100 THz.
Selon un mode de réalisation, les pixels sont des pixels non cohérents.
Selon un mode de réalisation, le deuxième faisceau provient d'une dérivation du premier faisceau.
Un autre mode de réalisation prévoit un système d'acquisition d'une image d'une scène, comportant : une source d'émission d'un premier faisceau d'ondes électromagnétiques adapté à illuminer la scène ; un capteur comportant

**2**

au moins deux pixels sensibles auxdites ondes ; une source d'émission d'un deuxième faisceau d'ondes électromagnétiques cohérent avec le premier faisceau adapté à illuminer le capteur ; et un dispositif de contrôle adapté à mettre en oeuvre les étapes suivantes : a) pour chaque pixel, lire une première valeur de sortie du pixel représentative de l'intensité du rayonnement reçu par le pixel pendant une première période d'intégration au cours de laquelle le capteur est illuminé par le deuxième faisceau ; et b) pour chaque pixel, lire une deuxième valeur de sortie du pixel représentative de l'intensité du rayonnement reçu par le pixel pendant une deuxième période d'intégration au cours de laquelle le capteur n'est pas illuminé par le deuxième faisceau, et réitérer plusieurs fois les étapes a) et b) en changeant, entre deux itérations successives, l'angle d'incidence ou un paramètre de phase du deuxième faisceau.

Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :

la figure 1 est une vue en coupe illustrant de façon très schématique un exemple d'un système d'acquisition d'image actif ;
la figure 2 est une vue de face illustrant schématiquement la disposition des pixels d'un capteur d'image du système de la figure 1 ;
la figure 3 est une vue en coupe agrandie d'une partie du système d'acquisition d'image de la figure 1, illustrant plus en détail le fonctionnement de ce système ;
les figures 4A à 4F et 5 sont des diagrammes illustrant un principe de fonctionnement du système d'acquisition d'image des figures 1 à 3 ;
la figure 6 est une vue en coupe illustrant de façon schématique et partielle un mode de réalisation d'un système d'acquisition d'image actif ;
la figure 7 illustre schématiquement un principe de fonctionnement d'une variante de réalisation du système de la figure 6 ; et
la figure 8 est une vue en coupe d'un exemple de réalisation d'un pixel d'un capteur d'image du système de la figure 6.

Par souci de clarté, de mêmes éléments ont été désignés par de mêmes références aux différentes figures et, de plus, les diverses figures ne sont pas tracées à l'échelle.

Description détaillée

Dans un système d'image actif térahertz ou infrarouge, pour obtenir une image de la scène de résolution supérieure à celle du capteur, on peut prévoir de déplacer mécaniquement le capteur par rapport à la scène, de façon à balayer successivement plusieurs parties de la scène. A titre d'exemple, une image partielle de la scène de résolution égale à celle du capteur peut être acquise à chaque étape du balayage, et les images partielles peuvent être combinées pour reconstituer une image complète de la scène de résolution supérieure à celle du capteur. Une telle méthode d'acquisition d'image nécessite toutefois des moyens d'actionnement mécanique du capteur qui peuvent s'avérer relativement complexes.

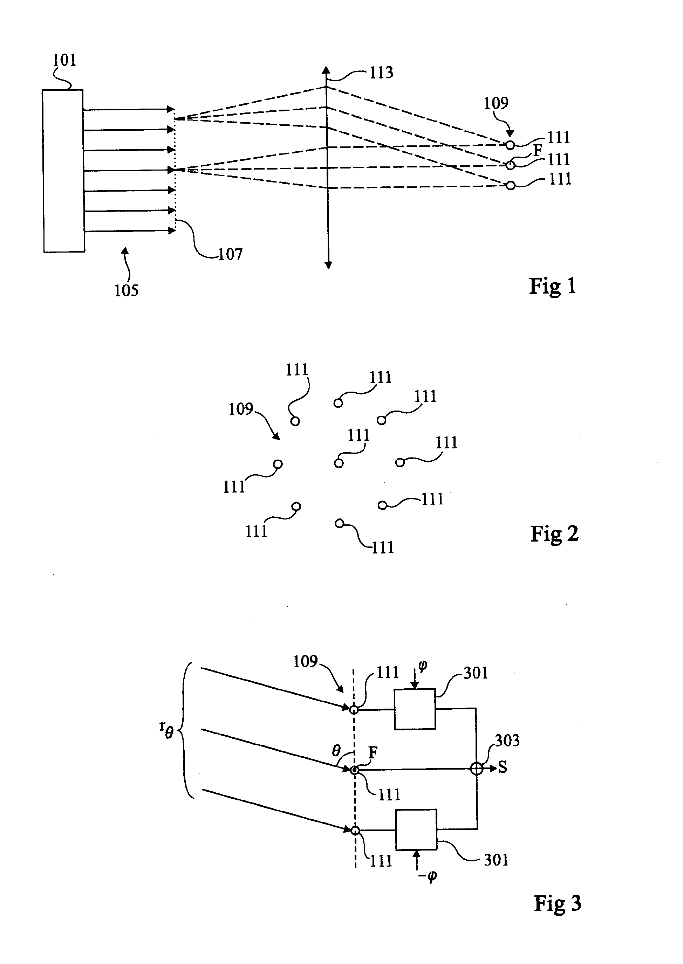

La figure 1 est une vue en coupe illustrant de façon schématique un autre exemple d'un système d'acquisition d'image actif permettant, sans déplacer le capteur, d'obtenir une image d'une scène de résolution supérieure à celle du capteur.

Le système de la figure 1 comprend une source 101 d'émission d'ondes électromagnétiques cohérentes, par exemple de fréquence comprise dans la plage allant de 100 GHz à 100 THz. Dans cet exemple, la source 101 est adaptée à générer un faisceau parallèle 105 d'ondes planes cohérentes adapté à illuminer une scène ou un objet 107 à observer. Le système de la figure 1 comprend en outre un capteur d'image 109 comportant une pluralité de détecteurs ou pixels 111 sensibles aux ondes émises par la source 101. Dans l'exemple représenté, la scène 107 à observer est située entre la source d'émission d'ondes électromagnétiques 101 et le capteur 109, les ondes reçues par le capteur 109 étant transmises à travers la scène 107. Dans cet exemple, le système d'acquisition comprend un système optique 113 disposé entre la scène 107 et le capteur 109, adapté à focaliser les ondes transmises par la scène 107 sur le capteur 109. Le système optique 113 est tel que les ondes provenant de chaque point de la scène à observer sont transmises en un faisceau parallèle, une onde plane, illuminant tous les pixels du capteur, la direction de propagation du faisceau dépendant de la position du point sur la scène. En d'autres termes, dans le système d'acquisition de la figure 1, l'angle d'incidence des rayons reçus par le capteur 109 permet de discriminer les ondes provenant de points distincts de la scène. Pour acquérir une image de la scène, on prévoit de mettre en oeuvre un filtrage angulaire permettant au système d'acquisition de discriminer les signaux reçus par le capteur par angles d'incidence.

La figure 2 est une vue de face du capteur 109 de la figure 1, illustrant schématiquement la disposition des pixels 111 sur le capteur. Dans l'exemple représenté, le capteur 109 comprend neuf pixels 111 disposés dans un même plan, huit de ces pixels, que l'on appellera ci-après pixels périphériques, étant disposés selon un cercle, et le neuvième pixel, que l'on appellera ci-après pixel central, étant disposé au centre du cercle de pixels périphériques. Dans cet exemple, les pixels périphériques sont répartis par paires, les pixels d'une même paire étant situés en des points diamétralement opposés du cercle de pixels périphériques.

Dans l'exemple de la figure 1, le capteur 109 est disposé de façon que le pixel central du capteur soit situé sensiblement au point focal F du système optique 113.

La figure 3 est une vue en coupe agrandie d'une partie du système d'acquisition d'image de la figure 1, illustrant plus en détail le fonctionnement de ce système. La figure 3 représente une ligne diamétrale de trois pixels 111 du capteur 109, comprenant le pixel central et deux pixels périphériques diamétralement opposés du capteur. Si on considère uniquement le rayonnement $r_\theta$ arrivant sur le capteur 109 avec un angle d'incidence $\theta$ par rapport à la ligne diamétrale de pixels, la somme des signaux reçus par les trois pixels de la figure 3 est égale à :

$$\left(1 + 2\cos\left(\frac{2\pi d \cos\theta}{\lambda}\right)\right)E_0 e^{j\omega t}$$

où $E_0$, $\theta$, $\lambda$ et $\omega$ désignent respectivement l'amplitude, l'angle d'incidence, la longueur d'onde et la pulsation du rayonnement $r_\theta$, et où d désigne le rayon du cercle de pixels, j désigne l'unité imaginaire et t désigne le temps.

La valeur absolue du terme

$$K = 1 + 2\cos\left(\frac{2\pi d \cos\theta}{\lambda}\right)$$

varie en fonction de la valeur de l'angle d'incidence $\theta$. Ainsi, si on considère que les trois pixels de la figure 3 forment un ensemble de détection élémentaire fournissant un signal de sortie égal à la somme des signaux reçus par les trois pixels, cet ensemble de détection présente intrinsèquement une certaine sélectivité angulaire, c'est-à-dire qu'il est plus sensible à certains angles d'incidence $\theta$ qu'à d'autres. Cette sélectivité angulaire dépend notamment de la longueur d'onde du rayonnement et de l'espacement d entre les pixels voisins de l'alignement.

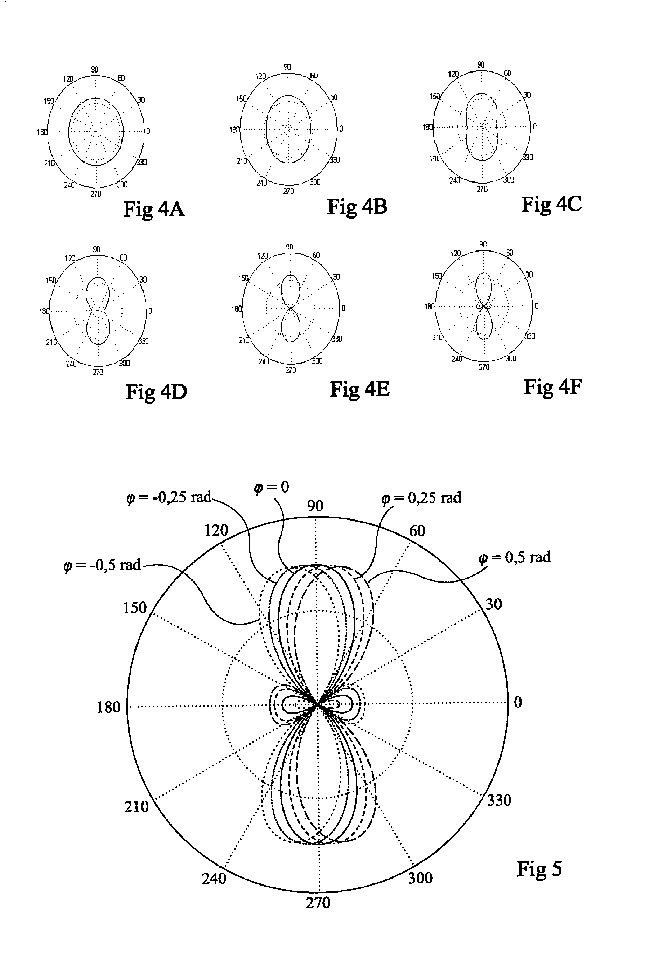

Les figures 4A à 4F sont des diagrammes représentant respectivement, pour différentes valeurs de l'espacement interpixel d de l'alignement de pixels de la figure 3, la valeur absolue du terme K en fonction de l'angle d'incidence $\theta$, pour une onde de fréquence égale à 300 GHz ($\lambda$ = 1 mm dans le vide).

La figure 4A représente le cas où la distance d est égale à 210 $\mu$m. Dans ce cas, on observe que la valeur absolue du terme K est pratiquement indépendante de l'angle $\theta$, c'est-à-dire que la sélectivité angulaire intrinsèque de l'alignement de pixels est relativement faible.

Les figures 4B à 4F représentent les cas où la distance d est respectivement égale à 420 $\mu$m, 630 $\mu$m, 840 $\mu$m, 1050 $\mu$m et 1260 $\mu$m. Parmi ces exemples, plus la distance d est importante, plus les variations de la valeur absolue du terme K en fonction de l'angle $\theta$ sont importantes, et donc plus la sélectivité angulaire intrinsèque de l'alignement de pixels est élevée. A titre d'exemple, sur la figure 4F, on observe que lorsque la distance d est égale à 1260 $\mu$m, la valeur absolue du terme K est relativement élevée pour les angles $\theta$ proches de 90 degrés, et pratiquement nulle pour les angles $\theta$ compris entre 0 et 60 degrés et entre 120 et 180 degrés. Il en résulte que l'ensemble de détection formé par la ligne diamétrale de pixels de la figure 3 est relativement sensible aux ondes arrivant avec un angle d'incidence $\theta$ de l'ordre de 90 degrés, et est peu sensible voire insensible aux ondes arrivant avec des angles d'incidence $\theta$ compris entre 0 et 60 degrés et entre 120 et 180 degrés.

Sur les figures 4A à 4F, on peut voir que, quelle que soit la distance d séparant les pixels de l'alignement, le cône de sélectivité angulaire intrinsèque de l'ensemble de détection est toujours centré sur un angle d'incidence $\theta$ égal à 90 degrés, c'est-à-dire que les rayons qui sont vus de façon privilégiée par l'alignement de pixels sont ceux arrivant avec un angle d'incidence $\theta$ égal à 90 degrés par rapport à l'alignement, c'est-à-dire sous incidence normale.

Pour modifier l'angle d'incidence $\theta$ vu de façon privilégiée par l'alignement de pixels de la figure 3, on peut prévoir, avant d'additionner les signaux fournis par les trois pixels de l'alignement, de déphaser les signaux fournis par un ou plusieurs des pixels de l'alignement par rapport aux signaux fournis par les autres pixels de l'alignement. A titre d'exemple, on peut prévoir de déphaser les signaux fournis par les deux pixels diamétralement opposés de l'alignement de valeurs de déphasage respectives $\varphi$ et $-\varphi$ par rapport aux signaux fournis par le pixel central. Pour cela, dans le système d'acquisition d'image des figures 1 à 3, chaque pixel périphérique du capteur peut être relié à un circuit de déphasage 301 (figure 3) adapté à déphaser d'une valeur variable les signaux fournis par le pixel. De plus, à chaque ligne diamétrale de pixels 111 peut être associé un circuit 303 adapté à fournir un signal S représentatif de la somme des signaux fournis respectivement par le pixel central et par les pixels périphériques diamétralement opposés de la ligne, après déphasage des signaux fournis par les pixels périphériques par les circuits 301. La somme S des signaux fournis par les trois pixels de l'alignement après déphasage des signaux fournis par les pixels diamétralement opposés est donnée par l'équation :

$$S = \left(1 + 2\cos\left(\frac{2\pi d \cos\theta}{\lambda} - \varphi\right)\right)E_0 e^{j\omega t}$$

En faisant varier le terme $\varphi$, on peut contrôler l'orientation du cône de sélectivité angulaire de l'ensemble de détection formé par l'alignement de pixels de la figure 3, et donc son angle de vue privilégié (comme illustré par la figure 5). Ceci permet de réaliser un filtrage angulaire du rayonnement arrivant sur l'alignement de pixels de la figure 3.

La figure 5 est un diagramme représentant, pour cinq valeurs distinctes du déphasage $\varphi$, l'évolution de la valeur absolue du terme

$$K' = 1 + 2\cos\left(\frac{2\pi d \cos\theta}{\lambda} - \varphi\right)$$

(ou diagramme de sélectivité angulaire) en fonction de l'angle d'incidence $\theta$, pour une onde de fréquence égale à 300 GHz et une distance d séparant deux pixels voisins égale à 1260 $\mu$m. Pour un déphasage $\varphi$ nul, le diagramme de sélectivité angulaire est identique à celui de la figure 4F, c'est-à-dire que les ondes vues de façon privilégiée par l'alignement de pixels de la figure 3 sont celles arrivant avec un angle d'incidence $\theta$ égal à 90 degrés. Lorsque le déphasage $\varphi$ varie, on observe que la direction principale du cône de sélectivité angulaire de l'alignement de pixels varie aussi. Dans cet exemple, pour des déphasages $\varphi$ respectivement égaux à -0,5 rad, -0,25 rad, 0,25 rad et 0,5 rad, les angles d'incidence $\theta$ vus de façon privilégiée par l'alignement de pixels sont respectivement égaux à 1,95 rad (approximativement 111,7 degrés), 1,76 rad (approximativement 100,8 degrés), 1,38 rad (approximativement 79,1 degrés) et 1,18 rad (approximativement 67,6 degrés).

Pour acquérir une image de la scène 107, on peut prévoir d'illuminer la scène 107 par le faisceau 105, et, pendant que la scène est illuminée, de mettre en oeuvre les étapes suivantes.

1) Pour chacune des lignes diamétrales de pixels du capteur 109, lire une valeur de sortie représentative de la puissance du signal S fourni par le circuit additionneur 303 pendant une période d'intégration du capteur. Pendant la période d'intégration, les déphasages $\varphi$ et $-\varphi$ appliqués aux pixels diamétralement opposés des lignes de pixels restent constants et sont par exemple les mêmes pour toutes les lignes diamétrales du capteur. Les valeurs de sortie des différentes lignes diamétrales du capteur sont par exemple lues simultanément ; et

2) Réitérer l'étape 1) en changeant, entre deux itérations successives, la valeur des déphasages $\varphi$ et $-\varphi$ appliqués aux pixels diamétralement opposés de chaque ligne diamétrale du capteur.

On réalise ainsi un balayage angulaire de plusieurs parties de la scène, ce qui permet, le cas échéant, d'obtenir une image de la scène de résolution supérieure à celle du capteur. La résolution de l'image finale est conditionnée par le pas d'incrémentation ou de décrémentation de la valeur de déphasage $\varphi$, et par le nombre de lignes diamétrales de pixels que comporte le capteur.

Un inconvénient du système d'acquisition d'image décrit en relation avec les figures 1 à 5 est lié au fait que les pixels 111 doivent être des pixels cohérents adaptés à fournir des signaux de sortie contenant une information de phase du rayonnement incident. Pour cela, un oscillateur local (propre à chaque pixel du capteur ou commun à tous les pixels du capteur et relié par des fils d'interconnexion à tous les pixels du capteur) fournissant un signal de référence cohérent avec la source 101 doit être couplé à chaque pixel du capteur. Ceci se traduit par des capteurs relativement complexes et présentant une consommation électrique importante.

Il serait souhaitable de pallier tout ou partie de ces inconvénients. En particulier, il serait souhaitable de pouvoir disposer de systèmes et procédés d'acquisition d'image en fréquence térahertz ou infrarouge permettant, sans déplacer le capteur, d'obtenir une image d'une scène de résolution supérieure à celle du capteur, compatibles avec des pixels ou détecteurs fournissant des signaux de sortie ne contenant pas l'information de phase du rayonnement incident.

Par la suite, on appellera pixel cohérent un pixel adapté à fournir un signal de sortie contenant l'information de phase du rayonnement incident, et pixel non cohérent, un pixel fournissant un signal de sortie ne contenant pas l'information de phase du rayonnement incident (par exemple une photodiode).

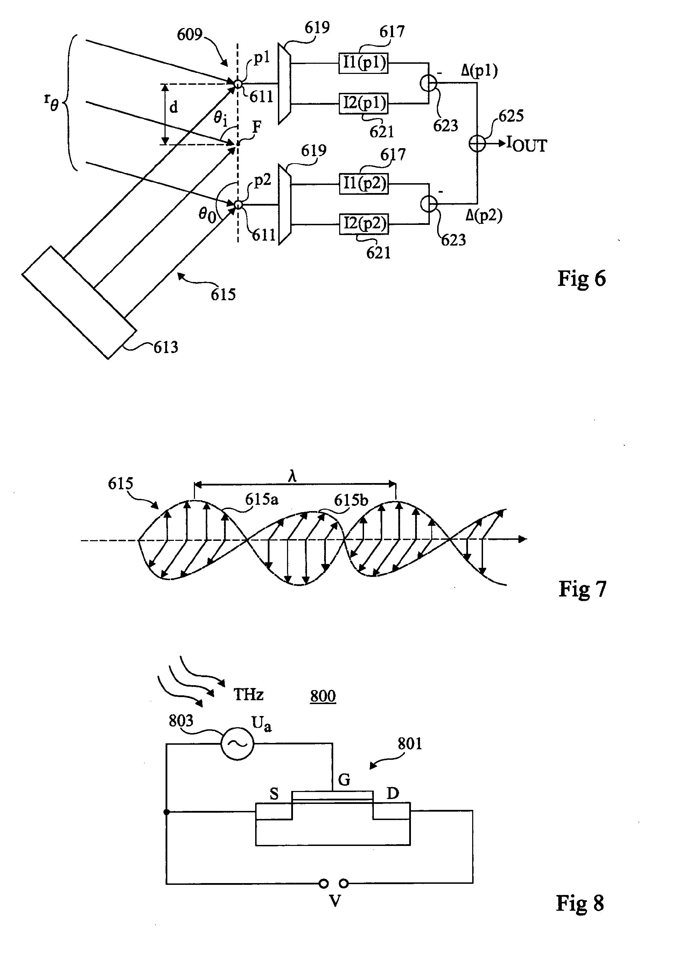

La figure 6 est une vue en coupe illustrant de façon schématique et partielle un exemple d'un mode de réalisation d'un système d'acquisition d'image actif. Le système de la figure 6 comprend des éléments communs avec le système d'acquisition d'image décrit en relation avec les figures 1 à 3. Ces éléments communs n'ont pas été représentés sur la figure 6 et ne seront pas décrits en détail ci-après. En particulier, la source 101 d'émission d'ondes électromagnétiques cohérentes, que l'on appellera ci-après source principale, et le système optique 113 sont communs aux deux systèmes et n'ont pas été représentés sur la figure 6.

Le système d'acquisition d'image de la figure 6 comprend, à la place du capteur d'image cohérent 109 du système des figures 1 à 3, un capteur d'image non cohérent 609. Le capteur 609 comprend une pluralité de détecteurs ou pixels non cohérents 611 sensibles aux ondes émises par la source 101. Dans cet exemple, le capteur 609 comprend huit pixels 611 disposés dans un même plan selon un cercle centré sur le point focal du système optique 113, les pixels 611 étant disposés par paires de pixels diamétralement opposés. Dans cet exemple, les pixels 611 sont adaptés à fournir une valeur de sortie proportionnelle au carré du module de la somme des ondes reçues pendant une période d'intégration du pixel. Les pixels 611 sont par exemple des pixels du type décrit dans l'article "A broadband THz imager in a low-cost CMOS technology" de Schuster et al., ou dans l'article "A CMOS focal-plane array for terahertz imaging" de Pfeiffer et al.. Un autre exemple de réalisation d'un pixel térahertz non cohérent compatible avec le système d'acquisition d'image de la figure 6 sera décrit ci-après en relation avec la figure 8. Plus généralement, le système de la figure 6 est compatible avec tout type de pixels non cohérents, par exemple une simple photodiode infrarouge dans le cas où la source 101 émet des ondes infrarouges.

Le système d'acquisition d'image de la figure 6 comprend en outre une source secondaire 613 d'émission d'ondes électromagnétiques cohérentes avec les ondes émises par la source principale 101. Dans cet exemple, la source 613 est adaptée à émettre un faisceau parallèle secondaire 615, une onde plane cohérente avec les ondes émises par la source 101. La source 613 est disposée de façon que, lorsqu'elle émet, le faisceau 615 illumine tous les pixels du capteur 609 directement, c'est-à-dire sans passer par la scène 107. Dans un mode de réalisation préféré, les sources 101 et 613 sont confondues, et le faisceau secondaire 615 est généré par dérivation (via un système optique non représenté) d'une partie des ondes émises par la source principale 101. Ceci permet notamment de limiter la consommation électrique du système d'acquisition d'image, et permet en outre d'assurer plus facilement la cohérence entre les ondes du faisceau principal 105 et les ondes du faisceau secondaire 615. Les modes de réalisation décrits ne se limitent toutefois pas à ce cas particulier. A titre de variante, on peut prévoir un système d'acquisition d'image dans lequel les sources 101 et 613 sont distinctes.

Si on considère par simplification qu'un pixel 611 du capteur 609 reçoit un nombre n entier supérieur à 1 d'ondes planes de même pulsation $\omega$ provenant de n points distincts de la scène 107 et arrivant sur le pixel avec des angles d'incidence distincts, la somme des ondes reçues par le pixel de ces n points peut s'écrire :

$$\sum_{0<i} U_i e^{j\omega t + \varphi_i}$$

où i est un entier allant de 1 à n, et où Ui et $\varphi_i$ désignent les amplitudes et phases respectives des ondes vues par le pixel.

Le signal de sortie du pixel est proportionnel au carré du module de la somme des ondes reçues, c'est-à-dire, après développement, à :

$$\sum_{0<i} U_i^2 + \sum_{0<i<k} 2 U_i U_k \cos(\varphi_k - \varphi_i) \ .$$

où k est un entier allant de 1 à n et différent de i.

Lorsque le faisceau secondaire 615 du système d'acquisition de la figure 6 est présent, le pixel reçoit en outre une onde plane additionnelle d'amplitude $U_0$ et de phase $\varphi_0$. Le signal fourni par le pixel est alors proportionnel à :

$$\sum_{0<i} U_i^2 + \sum_{0<i<k} 2 U_i U_k \cos(\varphi_k - \varphi_i) + \sum_{0<i} 2 U_i U_0 \cos(\varphi_i - \varphi_0) \ .$$

La différence $\Delta$ entre le signal I1 détecté par le pixel en présence du faisceau secondaire 615 et le signal I2 détecté par le pixel en l'absence du faisceau secondaire 615 est proportionnelle au terme :

$$\sum_{0<i} 2 U_i U_0 \cos(\varphi_i - \varphi_0) \ .$$

Si on considère deux pixels diamétralement opposés p1 et p2 du capteur, et si on désigne par $\varphi_i^{p1}$ et $\varphi_i^{p2}$ (i allant de 1 à n) les phases des ondes Ui susmentionnées vues respectivement par les pixels p1 et p2, par $\varphi_0^{p1}$ et $\varphi_0^{p2}$ les phases de l'onde U$_0$ susmentionnée vue respectivement par les pixels p1 et p2, et par $\Delta$(p1) et $\Delta$(p2) les différences respectives entre le signal I1(p1) détecté par le pixel p1 en présence du faisceau 615 et le signal I2(p1) détecté par le pixel p1 en l'absence du faisceau 615, et entre le signal I1(p2) détecté par le pixel p2 en présence du faisceau 615 et le signal I2(p2) détecté par le pixel p2 en l'absence du faisceau 615, la somme I$_{OUT}$ des valeurs $\Delta$(p1) et $\Delta$(p2) est proportionnelle au terme :

$$\sum_{0<i} 2U_i U_0 \left( \cos(\varphi_i^{p1} - \varphi_0^{p1}) + \cos(\varphi_i^{p2} - \varphi_0^{p2}) \right).$$

Si on désigne par $\theta_i$ (i allant de 1 à n) les angles d'incidence des ondes Ui susmentionnées par rapport à la ligne formée par les pixels p1 et p2, les termes $\varphi_i^{p1}$, $\varphi_i^{p2}$ peuvent s'écrire respectivement :

$$\varphi_i^{p1} = \phi + \frac{2\pi d \sin \theta_i}{\lambda} \quad \text{et} \quad \varphi_i^{p2} = \phi - \frac{2\pi d \sin \theta_i}{\lambda}$$

où $\Phi$ est un terme constant correspondant à la phase de toutes les ondes incidentes au plan focal du système optique 113, et où d est le rayon du cercle de pixels du capteur. En travaillant sous les conditions de stigmatisme de Gauss, où les rayons font des angles faibles avec l'axe focal, on constate que la somme I$_{OUT}$ des valeurs intermédiaires $\Delta$(p1) et $\Delta$(p2) est proportionnelle au terme :

$$\sum_{0<i} 4U_i U_0 \cos(\phi) \cos\left(\pi \frac{d}{\lambda} (\theta_i - \theta_0)\right)$$

Ainsi, si on considère que les pixels p1 et p2 de la figure 6 forment un ensemble de détection élémentaire fournissant un signal de sortie I$_{OUT}$ égale à la somme des valeurs $\Delta$(p1) et $\Delta$(p2), il apparaît que cet ensemble de détection présente intrinsèquement une certaine sélectivité angulaire, c'est-à-dire qu'il est plus sensible à certains angles d'incidence qu'à d'autres. Cette sélectivité angulaire dépend non seulement de la distance d et de la longueur d'onde $\lambda$ du rayonnement considéré, mais aussi de l'angle d'incidence $\theta_0$ du faisceau secondaire 615. En particulier, la direction principale du cône de sélectivité angulaire, c'est-à-dire l'angle de vue privilégié de l'ensemble de détection varie en fonction de l'angle d'incidence $\theta_0$ du faisceau secondaire 615. Plus particulièrement, dans cet exemple, l'angle de vue privilégié de l'ensemble de détection est égal à l'angle d'incidence $\theta_0$ du faisceau secondaire 615.

Dans cet exemple, le système d'acquisition d'image comprend un dispositif, non représenté, permettant de faire varier mécaniquement l'angle $\theta_0$ d'incidence du faisceau secondaire 615 sur le capteur 609. A titre d'exemple, ce dispositif peut comprendre un miroir pivotant et/ou une lentille pivotante, et un système d'actionnement associé, comportant par exemple un moteur.

Pour acquérir une image de la scène 107, on peut prévoir d'illuminer la scène 107 par le faisceau 105 et, pendant que la scène est illuminée, de mettre en oeuvre les étapes suivantes au moyen d'un dispositif de contrôle non représenté.

1) Pour chacune des lignes diamétrales de pixels du capteur 609, lire, pour chacun des pixels de la ligne, une première valeur I1 de sortie du pixel à l'issue d'une première période d'intégration du pixel au cours de laquelle le faisceau secondaire 615 est présent. La valeur de sortie I1 lue pour chaque pixel est par exemple stockée dans une mémoire 617 associée au pixel, par exemple par l'intermédiaire d'un multiplexeur 619. Les valeurs I1 de tous les pixels du capteur sont par exemple lues simultanément.

2) Pour chacune des lignes diamétrales de pixels du capteur 609, lire, pour chacun des pixels de la ligne, une deuxième valeur I2 de sortie du pixel à l'issue d'une deuxième période d'intégration distincte de la première période d'intégration, au cours de laquelle le faisceau secondaire 615 est absent (par exemple au moyen d'un obturateur non représenté). La valeur de sortie I2 lue pour chaque pixel est par exemple stockée dans une mémoire 621 associée au pixel, par exemple par l'intermédiaire du multiplexeur 619. A titre d'exemple, les valeurs I2 de tous les pixels du capteur sont par exemple lues simultanément.

3) Pour chacune des lignes diamétrales de pixels du capteur 609, calculer, pour chacun des pixels de la ligne, une valeur intermédiaire $\Delta$ égale à la différence des valeurs de sortie I1 et I2 du pixel lues aux étapes 1) et 2). A titre d'exemple, un circuit de soustraction 623 est associé à chacun des pixels du capteur, ce circuit recevant les valeurs I1 et I2 stockées dans les mémoires 617 et 621 du pixel, et fournissant la valeur $\Delta$.

4) Pour chacune des lignes diamétrales de pixels du capteur 609, calculer une valeur de sortie $I_{OUT}$ égale à la somme des valeurs intermédiaires $\Delta$ calculées pour chacun des pixels de la ligne. A titre d'exemple, un circuit additionneur 625 est associé à chacune des lignes diamétrales de pixels du capteur, ce circuit recevant les valeurs intermédiaires $\Delta$ calculées par les circuits de soustraction 623 de la ligne, et fournissant la valeur $I_{OUT}$. La valeur $I_{OUT}$ calculée pour chaque ligne diamétrale de pixels du capteur est représentative de l'intensité du rayonnement transmis par un point de la scène, et peut être utilisée pour déterminer la valeur d'un point de l'image finale.

5) Réitérer les étapes 1) à 4) en changeant, à chaque itération, l'angle d'incidence $\theta_0$ du faisceau secondaire 615 sur le capteur 609.

On réalise ainsi de façon particulièrement simple un balayage angulaire de la scène, ce qui permet, le cas échéant, d'obtenir une image de la scène de résolution supérieure à celle du capteur. La résolution de l'image finale est conditionnée par le pas d'incrémentation ou de décrémentation de l'angle d'incidence $\theta_0$ du faisceau 615 entre deux itérations successives, et par le nombre de lignes diamétrales de pixels que comporte le capteur.

La figure 7 illustre une variante de réalisation du système d'acquisition d'image de la figure 6. Dans cette variante de réalisation, l'angle d'incidence $\theta_0$ du faisceau secondaire 615 sur le capteur 609 est fixe, ce qui permet notamment de se passer d'un système d'actionnement mécanique du faisceau 615. Dans l'exemple de la figure 7, le faisceau 615 comprend des ondes planes parallèles cohérentes de même pulsation $\omega$ 615a et 615b, polarisées selon des directions distinctes. Dans l'exemple représenté, les ondes 615a et 615b ont des polarisations croisées, c'est-à-dire des directions de polarisation orthogonales. On prévoit de placer un polariseur (non représenté) devant chaque pixel du capteur, les polariseurs étant choisis de façon que, dans chaque paire de pixels diamétralement opposés du capteur, l'un des pixels reçoive du faisceau 615 uniquement les ondes 615a, et l'autre pixel reçoive du faisceau 615 uniquement les ondes 615b.

En faisant varier le déphasage entre les ondes 615a et 615b, on obtient un effet similaire ou identique à celui obtenu en faisant varier l'angle d'incidence $\theta_0$ du faisceau 615 dans le système d'acquisition d'image décrit en relation avec la figure 6. On peut ainsi, sans modifier l'angle d'incidence $\theta_0$ du faisceau 615, réaliser un balayage angulaire de la scène permettant, le cas échéant, d'obtenir une image de la scène de résolution supérieure à celle du capteur. A titre d'exemple, pour acquérir une image de la scène 107, on peut mettre en oeuvre un procédé comportant les étapes 1) à 4) du procédé décrit en relation avec la figure 6, dans lequel l'étape 5) du procédé décrit en relation avec la figure 6 est remplacée par l'étape suivante.

5') Réitérer les étapes 1) à 4) en changeant, à chaque itération, le déphasage entre les ondes 615a et 615b du faisceau secondaire 615.

La résolution de l'image finale est conditionnée par le pas d'incrémentation ou de décrémentation de l'angle d'incidence du déphasage entre les ondes 615a et 615b du faisceau 615, et par le nombre de lignes diamétrales de pixels que comporte le capteur.

La figure 8 est une vue en coupe d'un exemple de réalisation d'un pixel térahertz non cohérent 800 pouvant être utilisé dans un système d'acquisition d'image du type décrit en relation avec les figures 6 et 7. Dans cet exemple le pixel 800 comprend un transistor MOS 801, et une antenne 803 symbolisée sur la figure par un générateur de signal térahertz. L'antenne 803 est connectée entre la grille (G) et la source (S) du transistor 801. Lorsqu'un signal térahertz est reçu par le pixel, ce signal est appliqué au transistor sous la forme d'une tension grille-source, et le transistor fournit, entre son drain et sa source, une tension de sortie continue V proportionnelle à l'enveloppe ou amplitude du rayonnement térahertz incident.

Un avantage des procédés et systèmes d'acquisition d'image actifs décrits en relation avec les figures 6 à 8 est qu'il est possible d'obtenir une image en haute définition d'une scène à observer en utilisant un capteur comportant un faible nombre de pixels, et ce sans déplacer le capteur par rapport à la scène. Ceci permet de limiter de façon significative la complexité, le coût et la consommation électrique du système d'acquisition par rapport aux systèmes d'acquisition d'image actifs connus.

Un autre avantage des procédés et systèmes d'acquisition d'image décrits en relation avec les figures 6 à 8 est qu'ils sont compatibles avec des pixels ou détecteurs non cohérents, qui présentent l'avantage d'être plus simples et moins onéreux que les pixels cohérents utilisés dans les systèmes d'acquisition d'image du type décrit en relation avec les figures 1 à 5.

Des modes de réalisation particuliers ont été décrits. Diverses variantes et modifications apparaîtront à l'homme de l'art.

En particulier, les modes de réalisation décrits ne se limitent pas aux exemples décrits ci-dessus de disposition des pixels sur le capteur. L'homme du métier saura mettre en oeuvre le fonctionnement recherché en prévoyant d'autres dispositions des pixels sur le capteur. A titre d'exemple, le capteur pourra comprendre plusieurs cercles concentriques de pixels centrés sur le point focal du système optique 113. Par ailleurs, les modes de réalisation décrits ne se limitent pas à l'exemple décrit en relation avec les figures 6 et 7 dans lequel le capteur comprend huit pixels.

De plus, les modes de réalisation décrits ne se limitent pas à l'exemple décrit ci-dessus dans lequel les ondes illuminant la scène à observer sont vues par le capteur par transmission. Les modes de réalisation décrits sont compatibles avec des systèmes d'acquisition d'image dans lesquels les ondes émises par la source sont vues par le capteur par réflexion sur la scène.

En outre, les modes de réalisation décrits ne se limitent pas aux systèmes d'acquisition d'images térahertz ou infrarouges fonctionnant dans la plage de fréquences susmentionnée allant de 100 GHz à 100 THz. D'autres fréquences de fonctionnement peuvent être prévues.

## Revendications

1. Procédé d'acquisition d'une image d'une scène (107) illuminée par un premier faisceau (105) d'ondes électromagnétiques, à l'aide d'un capteur (609) comportant au moins deux pixels (611) sensibles auxdites ondes, comportant les étapes suivantes :

   a) pour chaque pixel (611), lire une première valeur (I1) de sortie du pixel représentative de l'intensité du rayonnement reçu par le pixel pendant une première période d'intégration au cours de laquelle le capteur (609) est illuminé par un deuxième faisceau (615) d'ondes électromagnétiques cohérent avec le premier faisceau (105) ; et

   b) pour chaque pixel (611), lire une deuxième valeur (I2) de sortie du pixel représentative de l'intensité du rayonnement reçu par le pixel pendant une deuxième période d'intégration au cours de laquelle le capteur n'est pas illuminé par le deuxième faisceau (615),

   dans lequel les étapes a) et b) sont réitérées plusieurs fois en changeant, entre deux itérations successives, l'angle d'incidence ($\theta_0$) ou un paramètre de phase du deuxième faisceau (615).

2. Procédé selon la revendication 1, dans lequel, à chaque itération, pour chaque pixel du capteur, une troisième valeur ($\Delta$) représentative de la différence entre les première (I1) et deuxième (I2) valeurs de sortie du pixel est calculée.

3. Procédé selon la revendication 1 ou 2, dans lequel le capteur (609) comprend un nombre pair de pixels (611) disposés en cercle, les pixels du cercle étant répartis par paires en des points diamétralement opposés du cercle.

4. Procédé selon la revendication 3 dans son rattachement à la revendication 2, dans lequel, à chaque itération, pour chaque paire de pixels diamétralement opposés du cercle, une quatrième valeur ($I_{OUT}$) représentative de la somme des troisièmes valeurs ($\Delta$) calculées pour chacun des pixels de la paire est calculée.

5. Procédé selon l'une quelconque des revendications 1 à 4, dans lequel le deuxième faisceau (615) comprend des premières ondes (615a) polarisées selon une première direction, et des deuxièmes ondes (615b) polarisées selon une deuxième direction différente de la première direction.

6. Procédé selon la revendication 5, dans lequel les première et deuxième directions sont orthogonales.

7. Procédé selon la revendication 5 ou 6, dans lequel, à chaque itération, une valeur de déphasage entre les premières ondes (615a) et les deuxièmes ondes (615b) est modifiée.

8. Procédé selon l'une quelconque des revendications 1 à 7, dans lequel lesdites ondes électromagnétiques sont à une fréquence comprise entre 100 GHz et 100 THz.

9. Procédé selon l'une quelconque des revendications 1 à 8, dans lequel les pixels (611) sont des pixels non cohérents.

10. Procédé selon l'une quelconque des revendications 1 à 9, dans lequel le deuxième faisceau (615) provient d'une dérivation du premier faisceau (105).

**11.** Système d'acquisition d'une image d'une scène (107), comportant :

une source (101) d'émission d'un premier faisceau (105) d'ondes électromagnétiques adapté à illuminer la scène (107) ;
un capteur (609) comportant au moins deux pixels (611) sensibles auxdites ondes ;
une source (613) d'émission d'un deuxième faisceau (615) d'ondes électromagnétiques cohérent avec le premier faisceau (105) adapté à illuminer le capteur (609) ; et
un dispositif de contrôle adapté à mettre en oeuvre les étapes suivantes :

a) pour chaque pixel (611), lire une première valeur (I1) de sortie du pixel représentative de l'intensité du rayonnement reçu par le pixel pendant une première période d'intégration au cours de laquelle le capteur (609) est illuminé par le deuxième faisceau (615) ; et
b) pour chaque pixel (611), lire une deuxième valeur (I2) de sortie du pixel représentative de l'intensité du rayonnement reçu par le pixel pendant une deuxième période d'intégration au cours de laquelle le capteur n'est pas illuminé par le deuxième faisceau (615), et

réitérer plusieurs fois les étapes a) et b) en changeant, entre deux itérations successives, l'angle d'incidence ($\theta_0$) ou un paramètre de phase du deuxième faisceau (615).

**Patentansprüche**

**1.** Ein Verfahren zum Erhalten eines Bildes eines Szene (107), der durch einen ersten Strahl (105) einer elektromagnetischen Welle beleuchtet wird, durch Mittel eines Sensors (609), der wenigstens zwei Pixel (611) aufweist, die empfindlich für diese Wellen sind, wobei das Verfahren die folgenden Schritte aufweist:

a) für jedes Pixel (611), Auslesen eines ersten Ausgabewertes (I1) des Pixels, wobei der Ausgabewert bezeichnend für die Intensität der Strahlung ist, die von dem Pixel während einer ersten Integrationsperiode empfangen wurde, während der der Sensor (609) von einem zweiten Strahl (615) einer elektromagnetischen Welle beleuchtet wird, die kohärent mit dem ersten Strahl (105) ist; und
b) für jedes Pixel (611), Auslesen eines zweiten Ausgabewertes (I2) des Pixels, wobei der Ausgabewert bezeichnend für die Intensität der Strahlung ist, die von dem Pixel während einer zweiten Integrationsperiode empfangen wurde, während der der Sensor nicht von dem zweiten Strahl (615) beleuchtet wird,

wobei die Schritte a) und b) mehrfach wiederholt werden, wobei zwischen aufeinanderfolgenden Iterationen der Einfallswinkel ($\Theta_0$) oder ein Phasenparameter des zweiten Strahls (615) verändert wird.

**2.** Das Verfahren nach Anspruch 1, wobei bei jeder Iteration, für jedes Pixel des Sensors ein dritter Wert ($\Delta$), der bezeichnend für die Differenz zwischen dem ersten (I1) und dem zweiten (I2) Ausgabewert des Pixels ist, berechnet wird.

**3.** Das Verfahren nach Anspruch 1 oder 2, wobei der Sensor (609) eine gerade Anzahl von Pixel (611) enthält, die kreisförmig angeordnet sind, wobei die Pixel des Kreises in Paaren an diametral gegenüberliegenden Punkten des Kreises verteilt sind.

**4.** Das Verfahren nach Anspruch 2 und 3, wobei bei jeder Iteration für jedes Paar von diametral gegenüberliegenden Pixel des Kreises ein vierter Wert ($I_{OUT}$) berechnet wird, der bezeichnend für die Summe der dritten Werte ($\Delta$) ist, die für jedes Pixel in dem Paar berechnet wurde.

**5.** Das Verfahren nach einem der Ansprüche 1 bis 4, wobei der zweite Strahl (615) erste Wellen (615a) aufweist, die entlang einer ersten Richtung polarisiert sind und zweite Wellen (615b) aufweist, die entlang einer zweiten Richtung polarisiert sind, wobei sich die erste Richtung von der zweiten Richtung unterscheidet.

**6.** Das Verfahren nach Anspruch 5, wobei die erste und die zweite Richtung orthogonal sind.

**7.** Das Verfahren nach Anspruch 5 oder 6, wobei bei jeder Iteration ein Wert der Phasenverschiebung zwischen den ersten Wellen (615a) und den zweiten Wellen (615b) modifiziert wird.

8. Das Verfahren nach einem der Ansprüche 1 bis 7, wobei die elektromagnetischen Wellen Frequenzen im Bereich von 100 GHz bis 100 THz aufweisen.

9. Das Verfahren nach einem der Ansprüche 1 bis 8, wobei die Pixel (611) nicht kohärente Pixel sind.

10. Das Verfahren nach einem der Ansprüche 1 bis 9, wobei der zweite Strahl (615) aus einer Verzweigung des ersten Strahls (105) resultiert.

11. Ein System zum Erhalten eines Bildes eines Szene (107), wobei das System Folgendes aufweist:

eine Quelle (101), die einen Strahl (105) einer ersten elektromagnetischen Welle aussendet, wobei die Quelle geeignet ist den Vorgang (107) zu beleuchten;
einen Sensor (609), der wenigstens zwei Pixel (611) aufweist, die empfindlich für die Wellen sind;
eine Quelle (613), die einen Strahl (615) einer zweiten elektromagnetischen Welle aussendet, die kohärent zu dem ersten Strahl (105) ist, wobei die Quelle geeignet ist den Sensor (609) zu beleuchten; und
eine Steuervorrichtung, die geeignet ist die folgenden Schritte zu implementieren:

a) für jedes Pixel (611), Auslesen eines ersten Ausgabewertes (I1) des Pixels, wobei der Ausgabewert bezeichnend für die Intensität der Strahlung ist, die von dem Pixel während einer ersten Integrationsperiode empfangen wurde, während der der Sensor (609) von einem zweiten Strahl (615) beleuchtet wird; und
b) für jedes Pixel (611), Auslesen eines zweiten Ausgabewertes (12) des Pixels, wobei der Ausgabewert bezeichnend für die Intensität der Strahlung ist, die von dem Pixel während einer zweiten Integrationsperiode empfangen wurde, während der der Sensor nicht von dem zweiten Strahl (615) beleuchtet wird, und

mehrfaches wiederholen der Schritte a) und b), wobei zwischen aufeinanderfolgenden Iterationen der Einfallswinkel ($\Theta_0$) oder ein Phasenparameter des zweiten Strahls (615) verändert wird.

**Claims**

1. A method of acquiring an image of a scene (107) illuminated by a first electromagnetic wave beam (105), by means of a sensor (609) comprising at least two pixels (611) sensitive to said waves, comprising the steps of:

a) for each pixel (611), reading a first output value (I1) of the pixel representative of the intensity of the radiation received by the pixel during a first integration period during which the sensor (609) is illuminated by a second electromagnetic wave beam (615) coherent with the first beam (105); and
b) for each pixel (611), reading a second output value (I2) of the pixel representative of the intensity of the radiation received by the pixel during a second integration period during which the sensor is not illuminated by the second beam (615),

wherein steps a) and b) are repeated a plurality of times by changing, between two successive iterations, the angle of incidence ($\theta_0$) or a phase parameter of the second beam (615).

2. The method of claim 1, wherein, at each iteration, for each pixel of the sensor, a third value ($\Delta$) representative of the difference between the first (I1) and second (I2) output values of the pixel is calculated.

3. The method of claim 1 or 2, wherein the sensor (609) comprises an even number of pixels (611) arranged in a circle, the pixels of the circle being distributed in pairs at diametrically opposite points of the circle.

4. The method of claim 3, when depending on claim 2, wherein, at each iteration, for each pair of diametrically opposite pixels of the circle, a fourth value ($I_{OUT}$) representative of the sum of the third values ($\Delta$) calculated for each of the pixels in the pair is calculated.

5. The method of any of claims 1 to 4, wherein the second beam (615) comprises first waves (615a) polarized along a first direction, and second waves (615b) polarized along a second direction different from the first direction.

6. The method of claim 5, wherein the first and second directions are orthogonal.

7. The method of claim 5 or 6, wherein, at each iteration, a value of the phase shift between the first waves (615a) and the second waves (615b) is modified.

8. The method of any of claims 1 to 7, wherein said electromagnetic waves are at a frequency in the range from 100 GHz to 100 THz.

9. The method of any of claims 1 to 8, wherein the pixels (611) are non-coherent pixels.

10. The method of any of claims 1 to 9, wherein the second beam (615) results from a branching of the first beam (105).

11. A system for acquiring an image of a scene (107), comprising:

a source (101) emitting a first electromagnetic wave beam (105) capable of illuminating the scene (107);
a sensor (609) comprising at least two pixels (611) sensitive to said waves;
a source (613) emitting a second electromagnetic wave beam (615) coherent with the first beam (105) capable of illuminating the sensor (609); and
a control device adapted to implement the steps of:

a) for each pixel (611), reading a first output value (I1) of the pixel representative of the intensity of the radiation received by the pixel during a first integration period during which the sensor (609) is illuminated by the second beam (615); and
b) for each pixel (611), reading a second output value (I2) of the pixel representative of the intensity of the radiation received by the pixel during a second integration period during which the sensor is not illuminated by the second beam (615), and
repeating steps a) and b) a plurality of times by changing, between two successive iterations, the angle of incidence $(\theta_0)$ or a phase parameter of the second beam (615).

**Fig 1**

**Fig 2**

**Fig 3**

Fig 4A

Fig 4B

Fig 4C

Fig 4D

Fig 4E

Fig 4F

$\varphi = -0,25$ rad

$\varphi = 0$

$\varphi = 0,25$ rad

$\varphi = -0,5$ rad

$\varphi = 0,5$ rad

Fig 5

**Fig 6**

**Fig 7**

**Fig 8**

## RÉFÉRENCES CITÉES DANS LA DESCRIPTION

**Documents brevets cités dans la description**

- GB 2458802 A

**Littérature non-brevet citée dans la description**

- **SCHUSTER.** *A broadband THz imager in a low-cost CMOS technology*
- **PFEIFFER.** *A CMOS focal-plane array for terahertz imaging*